# EUROPÄISCHE PATENTANMELDUNG

(11) **EP 4 053 955 A1**
(43) Veröffentlichungstag der Anmeldung: **07.09.2022**
(21) Anmeldenummer: 21160487.1
(22) Anmeldetag: 03.03.2021
(51) Int. Cl.: H01M 10/04, H01M 10/0525, H01M 10/0585, H01M 10/0587, H01M 50/103, H01M 50/107, H01M 50/119

(54) **VERFAHREN ZUR HERSTELLUNG EINES ELEKTROCHEMISCHEN ENERGIESPEICHERELEMENTS**

(71) Anmelder: VARTA Microbattery GmbH, 73479 Ellwangen Jagst (DE)
(72) Erfinder: Elmer, Martin, 73479 Ellwangen (DE); Fürst, Martin, 73492 Rainau-Schwabsberg (DE)
(74) Vertreter: Ostertag & Partner Patentanwälte mbB

(57) **Zusammenfassung**

Bei einem Verfahren zur Herstellung eines elektrochemischen Energiespeicherelements (100) weist das Energiespeicherelement ein Gehäuse mit mindestens einem metallischen Gehäuseteil (101) und einen im Inneren des Gehäuses angeordneten Elektroden-Separator-Verbund (105) auf. Das Verfahren umfasst die folgenden Verfahrensschritte:
- Das metallische Gehäuseteil (101) und der Elektroden-Separator-Verbund (105) werden bereitgestellt, und
- das metallische Gehäuseteil (101) wird unter Bewirkung einer Expansion des Gehäuseteils erwärmt, und
- der Elektroden-Separator-Verbund (105) wird in das expandierte metallische Gehäuseteil (101) eingebracht, und
- das metallische Gehäuseteil (101) wird zur Ausbildung des Gehäuses verschlossen.

## Beschreibung

Die vorliegende Erfindung betrifft ein Verfahren zur Herstellung eines elektrochemischen Energiespeicherelements und ein derart hergestelltes elektrochemisches Energiespeicherelement.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Sie umfassen in der Regel mindestens eine Energiespeicherzelle mit einer positiven und einer negativen Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die mindestens eine elektrochemische Energiespeicherzelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht. Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einersekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute sekundäre Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und herwandern kann. Für Anwendungen im Automobilbereich, für E-Bikes oder auch für andere Anwendungen mit hohem Energiebedarf, wie z.B. in Werkzeugen, werden sekundäre Lithium-Ionen-Zellen mit möglichst hoher Energiedichte benötigt, die gleichzeitig in der Lage sind, mit hohen Strömen beim Laden und Entladen belastet zu werden.

Die negative Elektrode und die positive Elektrode bei Energiespeicherzellen werden oftmals von sogenannten Kompositelektroden gebildet, die neben elektrochemisch aktiven Komponenten auch elektrochemisch inaktive Komponenten umfassen. Die Kompositelektroden werden oftmals mit einem oder mehreren Separatoren zu einem Verbundkörper kombiniert. Hierbei werden die Elektroden und Separatoren meist unter Druck, gegebenenfalls auch durch Lamination oder durch Verklebung, zu einem Verbundkörper miteinander verbunden. Die grundsätzliche Funktionsfähigkeit der Zelle kann dann durch Tränkung des Verbundes mit einem Elektrolyten hergestellt werden.

Alternativ kann an Stelle eines mit einem Elektrolyten getränkten Separators auch ein Festkörperelektrolyt eingesetzt werden.

In vielen Ausführungsformen wird der Verbundkörper in Form eines Wickels gebildet oder zu einem Wickel verarbeitet. In der Regel umfasst er die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Häufig sind Energiespeicherzellen als zylindrische Rundzellen ausgebildet, deren Gehäuse sich durch eine runde oder gegebenenfalls ovale Grundfläche und einer zylindrischen Mantelfläche auszeichnet. Energiespeicherzellen dieser Art umfassen in der Regel einen Elektroden-Separator-Verbundkörper in Form eines Wickels. Zur Bildung einer Energiespeicherzelle mit zylindrischer Grundform können die bandförmigen Elektroden und Separatoren in einer Wickelmaschine zu einem spiralförmigen Wickel verarbeitet werden. Eine solcher Wickel passt perfekt in ein zylindrisches Gehäuse.

Ein verbreiteter Formfaktor für zylindrische Rundzellen ist beispielsweise der Formfaktor 21 x 70 (Durchmesser x Höhe in mm). Moderne Lithium-Ionen-Zellen dieses Formfaktors können beispielsweise eine Energiedichte von bis zu 270 Wh/kg erreichen.

Neben solchen zylindrischen Rundzellen, deren Höhe in der Regel größer als ihr Durchmesser ist, sind insbesondere für die Versorgungvon kleinen elektronischen Geräte wie Hörgeräten oder drahtlosen Kopfhörern zylindrische Knopfzellen weit verbreitet, die sich im Allgemeinen durch eine Höhe auszeichnen, die geringer als ihr Durchmesser ist.

In der WO 2017/215900 A1 sind Energiespeicherzellen beschrieben, bei denen derdie Elektroden und der Elektroden-Separator-Verbund bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbundes versetzt zueinander angeordnet, so dass Längsränder der Stromkollektoren der positiven Elektroden an einer Seite und Längsränder der Stromkollektoren der negativen Elektroden an der gegenüberliegenden Seite aus dem Wickel austreten. Zur elektrischen Kontaktierung der Stromkollektoren weist die Zelle mindestens ein Kontaktelement auf, das auf einem der Längsränder aufliegt. Das Kontaktelement ist mit dem Längsrand durch Verschweißung verbunden. Dadurch ist es möglich, den Stromkollektor und damit auch die dazugehörige Elektrode über seine/ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden.

In anderen Fällen können Energiespeicherelemente einen prismatischen Verbund aus gestapelten Elektroden aufweisen. Das Gehäuse solcher Energiespeicherelemente zeichnet sich durch eine polygonale und insbesondere durch eine rechteckige Grundfläche aus. Hierbei sind Elektroden mit polygonaler Grundfläche derart gestapelt, dass ein Verbundkörper mit prismatischer Grundform entsteht. Innerhalb des Stapels sind entgegengesetzt gepolte Elektroden in der Regel durch Separatoren oder Schichten eines Festkörperelektrolyten voneinander getrennt, so dass kein unmittelbarer Kontakt zwischen den entgegengesetzt gepolten Elektroden besteht. Ein aus rechteckigen Elektrodenstapeln gebildeter prismatischer oder kubischer Verbundkörper passt beispielsweise perfekt in ein entsprechendes prismatisches oder kubisches Gehäuse. Innerhalb des Gehäuses können die Elektroden des Stapels elektrisch miteinander verschaltet werden. Üblicherweise werden gleich gepolte Elektroden innerhalb des Gehäuses an einen gemeinsamen Stromleiter gekoppelt, der entweder elektrisch mit einem der Gehäuseteile verbunden oder aber über eine entsprechende Durchbrechung aus dem Gehäuse herausgeführt ist.

Elektrochemische Energiespeicherelemente weisen oft ein metallisches Gehäuse aus. Bei der Herstellung der Energiespeicherelemente muss in solchen Fällen der Elektroden-Separator-Verbund in Form des beschriebenen Wickels oder Stapels in ein zylindrisches oder prismatisches metallisches Gehäuse eingesetzt werden, das anschließend verschlossen wird. Diese Vorgänge erfolgen in der Regel in automatisierter Weise im Rahmen von industriellen Fertigungsprozessen.

### AUFGABE UND LÖSUNG

Der vorliegenden Erfindung lag daher die Aufgabe zugrunde, Energiespeicherelemente mit möglichst hoher Energiedichte bereitzustellen.

Diese Aufgabe wird durch ein Verfahren zur Herstellung eines elektrochemischen Energiespeicherelements gelöst, welches sich aus dem Anspruch 1 ergibt. Weiterhin wird die Aufgabe durch das elektrochemische Energiespeicherelement mit den Merkmalen des Anspruchs 13 gelöst. Bevorzugte Ausgestaltungen des Verfahrens bzw. des Energiespeicherelements ergeben sich aus den abhängigen Ansprüchen.

Das erfindungsgemäße Verfahren dient zur Herstellung eines elektrochemischen Energiespeicherelements, wobei das Energiespeicherelement ein Gehäuse mit mindestens einem metallischen Gehäuseteil und einem im Inneren des Gehäuses angeordneten Elektroden-Separator-Verbund aufweist. Das Herstellungsverfahren umfasst dabei die folgenden Verfahrensschritte:
a. Das metallische Gehäuseteil und der Elektroden-Separator-Verbund werden bereitgestellt, und
b. das metallische Gehäuseteil wird unter Bewirkung einer Expansion des Gehäuseteils erwärmt, und
c. der Elektroden-Separator-Verbund wird in das expandierte metallische Gehäuseteil eingebracht, und
d. das metallische Gehäuseteil wird zur Ausbildung des Gehäuses verschlossen.

Das metallische Gehäuseteil umschließt einen Innenraum, in den der Elektroden-Separator-Verbund eingebracht werden kann. Im Fall von zylindrischen Rundzellen oder Knopfzellen ist das Gehäuseteil bevorzugt hohlzylindrisch, insbesondere becherförmig, ausgebildet. Im Fall von prismatischen Energiespeicherelementen ist das metallische Gehäuseteil bevorzugt gleichfalls prismatisch ausgebildet. Das metallische Gehäuseteil kann demgemäß, je nach Form des herzustellenden Energiespeicherelements, eine runde oder ovale oder eine polygonale, insbesondere rechteckige, Grundfläche aufweisen.

Im Fall von zylindrischen Rundzellen umfasst das Gehäuseteil bevorzugt einen umlaufenden Gehäusemantel mit rundem oder ovalem Querschnitt, und besonders bevorzugt zusätzlich einen Boden mit der runden oder ovalen Grundfläche. Im Fall von prismatischen Zellen umfasst das Gehäuseteil bevorzugt n Seitenteile, wobei n der Anzahl der Ecken der Grundfläche entspricht und jedes Seitenteil über eine gemeinsame Kante mit einem ersten benachbarten und über eine weitere gemeinsame Kante mit einem zweiten benachbarten Seitenteil verbunden ist. Die Seitenteile sind bevorzugt rechteckig ausgebildet. Besonders bevorzugt umfasst das Gehäuseteil im Fall eines prismatischen Energiespeicherelements einen Boden mit der polygonalen, insbesondere rechteckigen, Grundfläche.

Das Gehäuseteil umfasst mindestens eine Öffnung, durch die der Elektroden-Separator-Verbund in das metallische Gehäuseteil eingebracht, insbesondere eingeschoben, werden kann. Im Fall einer zylindrischen Zelle ist diese Öffnung kreisrund oder oval ausgebildet und durch einen Rand des Gehäusemantels definiert. Im Fall eines prismatischen Energiespeicherelements ist diese Öffnung polygonal wie die Grundfläche ausgebildet und wird durch Kanten der Seitenteile definiert. Die Größe und Form der Öffnung begrenzen die Größe und Form des einzubringenden Elektroden-Separator-Verbundes.

Die Dimensionen und die Form des metallischen Gehäuseteils und des Elektroden-Separator-Verbundes sind zweckmäßigerweise aufeinander abgestimmt, um das Volumen des Innenraums möglichst gut ausnutzen zu können. Wenn der Elektroden-Separator-Verbund zylindrisch ausgebildet ist, wird daher das metallische Gehäuseteil bevorzugt hohlzylindrisch ausgebildet, um den zylindrischen Elektroden-Separator-Verbund perfekt umschließen zu können. Bei einer prismatischen oder quaderartigen Form des Elektroden-Separator-Verbundes wird das metallische Gehäuseteil in entsprechender Weise prismatisch beziehungsweise quaderförmig ausgebildet.

Durch die Erwärmung gemäß dem erfindungsgemäßen Verfahren dehnt sich das Material des metallischen Gehäuseteils (thermische Expansion), wobei sich die Öffnung des metallischen Gehäuseteils aufweitet und das Volumen des von dem Gehäuseteil umschlossenen Innenraums ansteigt. Hierdurch wird zum einen die Einbringung des Elektroden-Separator-Verbundes in das Gehäuseteil vereinfacht, da mehr Raum zur Verfügung steht. Zum anderen wird es hierdurch ermöglicht, dass der zur Verfügung stehende Raum im Inneren des metallischen Gehäuseteils besser ausgenutzt werden kann, da ein größerer Elektroden-Separator-Verbund eingebracht werden kann, als dies bei herkömmlichen Verfahren, also ohne Erwärmung des Gehäuseteils, möglich wäre. Es kann daher ein Elektroden-Separator-Verbund, beispielsweise ein zylindrischer Wickel, mit einem im Vergleich zu herkömmlichen Verfahren größerem Durchmesser verbaut werden. Hierdurch kann mehr elektrochemisches Aktivmaterial in das Energiespeicherelement eingebracht werden, wodurch ein Kapazitätsgewinn und eine größere Energiedichte des Energiespeicherelements erreicht wird. Insgesamt erlaubt das erfindungsgemäße Verfahren, auf den bei herkömmlich hergestellten Energiespeicherelementen vorgesehenen Freiraum zwischen Elektroden-Separator-Verbund und Gehäuse, der zur problemlosen Einbringung des Elektroden-Separator-Verbunds in das Gehäuse bei der Herstellung erforderlich ist, zu verzichten.

Ein weiterer besonderer Vorteil des erfindungsgemäßen Verfahrens liegt darin, dass durch die Erwärmung des metallischen Gehäuseteils dem Gehäuseteil und insbesondere dem Innenraum des Gehäuseteils Feuchtigkeit entzogen werden kann. Gegebenenfalls vorhandene Feuchtigkeit im Inneren des Gehäuses kann negative Auswirkungen auf die Zellperformance haben. Derartige negative Auswirkungen von Feuchtigkeit werden durch das erfindungsgemäße Herstellungsverfahren bei den hergestellten Energiespeicherelementen verhindert oder zumindest minimiert.

Bei Lade- und Entladevorgängen können die Elektroden elektrochemischer Energiespeicherelemente Volumenschwankungen unterliegen. Insbesondere bei Lithium-Ionen-Zellen kann das ein Problem darstellen, da die Volumenschwankungen mit einer mechanischen Beanspruchung der Elektroden einhergehen und die Lebensdauer der Energiespeicherzellen mindern können. Auch diesem Problem wird durch das erfindungsgemäße Vorgehen entgegengewirkt. Durch die gemäß der Erfindung optimierte Volumenausnutzung des Innenraums des Gehäuseteils wird erreicht, dass durch das Gehäuse ein Gegendruck auf die expandierenden Elektroden ausgeübt wird, so dass die Elektroden besser verspannen, wodurch deren mechanische Belastung bei dem Ladeprozess verringert wird.

Darüber hinaus können durch die optimierte Volumenausnutzung bei erfindungsgemäß hergestellten Energiespeicherelementen auch Vibrationen des Elektroden-Separator-Verbunds innerhalb des Gehäuses vermieden werden. Je nach Anwendungsgebiet, beispielsweise bei Powertools, können auftretende Vibrationen bei herkömmlich hergestellten Energiespeicherelementen eine erhebliche Belastung bedeuten. Diese Vibrationsbelastung kann bei erfindungsgemäß hergestellten Energiespeicherelementen deutlich verringert sein, da derverfügbare Innenraum optimal ausgenutzt wird. Auch in dieser Hinsicht kann eine Erhöhung der Lebensdauer der erfindungsgemäß hergestellten Energiespeicherelemente erreicht werden.

Die erfindungsgemäß vorgesehene Erwärmung des metallischen Gehäuseteils lässt sich ohne Weiteres in automatisierter Form umsetzen, so dass das erfindungsgemäße Verfahren in industriellen Fertigungsprozessen sehr gut umsetzbar ist.

In besonders bevorzugter Weise kann das Erwärmen des metallischen Gehäuseteils vor dem Einsetzen des Elektroden-Separator-Verbundes im Rahmen des erfindungsgemäßen Verfahrens in folgender Weise umgesetzt werden:
a. Das Erwärmen des metallischen Gehäuseteils erfolgt durch elektrischen Energieeintrag, insbesondere durch induktiven und/oder ohmschen Energieeintrag.

Durch einen elektrischen Energieeintrag gemäß dem vorgenannten Merkmal a. kann sehr schnell und in sehr gezielter Weise eine Erwärmung des metallischen Gehäuseteils erreicht werden.

Bei dem induktiven Energieeintrag beziehungsweise bei einem induktiven Erwärmen wird mit einer von Wechselstrom durchflossenen Spule, dem Induktor, ein magnetisches Wechselfeld erzeugt, das in dem metallischen Gehäuseteil Wirbelströme induziert. Durch die erzeugten Wirbelstromverluste kommt es zu einem Heizen beziehungsweise einer Erwärmung des metallischen Gehäuseteils. Da die Wärme in dem Gehäuseteil selbst entsteht, muss also keine Übertragung durch Wärmeleitung erfolgen. Die Wärmeleistung ist dabei sehr gut steuerbar, so dass sich dieses Verfahren zum Heizen beziehungsweise Erwärmen des metallischen Gehäuseteils auch insbesondere im Hinblick auf eine Automatisierung des Prozesses sehr gut eignet.

Insbesondere ist es möglich, mit Hilfe eines induktiven Energieeintrags das Gehäuseteil in einem Bereich stärker zu Erwärmen als in einem anderen Bereich. Es kann beispielsweise gewünscht sein, im Falle eines becherförmigen Gehäuseteils den Rand der Öffnung stärker zu erwärmen als den Be

Bei dem ohmschen Energieeintrag wird ein elektrischer Strom durch das metallische Gehäuseteil geleitet, wobei es zu einer Umwandlung elektrischer Energie in thermische Energie kommt und das Gehäuseteil hierbei erwärmt wird. Bevorzugt wird über zwei oder mehr Elektroden, die unmittelbar mit dem Gehäuseteil in Kontakt treten, eine elektrische Spannung an das Gehäuseteil angelegt. Auch dieses Verfahren ist sehr gut steuerbar und gezielt einsetzbar, so dass sich auch dieses Verfahren insbesondere im Hinblick auf eine Automatisierung des Prozesses sehr gut eignet.

In besonders bevorzugter Weise ist das Verfahren durch mindestens eines der unmittelbar folgenden zusätzlichen Merkmale gekennzeichnet:
a. Das Erwärmen des metallischen Gehäuseteils umfasst eine Hochtemperaturphase.
b. In der Hochtemperaturphase wird das metallische Gehäuseteil zumindest bereichsweise auf eine Temperatur in einem Bereich von 80 bis 150 °C, vorzugsweise von 90 bis 110 °C, besonders bevorzugt von 95 bis 105 °C, erwärmt.

In der Hochtemperaturphase wird das metallische Gehäuseteil vorzugsweise auf eine Temperatur in einem Bereich von 80 bis 150 °C erhitzt. Besonders bevorzugt liegt die Temperatur in einem Bereich von 90 bis 110 °C, insbesondere von 95 bis 105 °C. Dabei kann es vorgesehen sein, dass diese Temperatur möglicherweise nur in einem Abschnitt beziehungsweise in einem Bereich des gesamten Gehäuseteils erreicht wird. Wichtig ist hierbei, dass die Öffnung des Gehäuseteils von der Erwärmung erfasst wird.

Zweckmäßigerweise liegt die Temperatur der Hochtemperaturphase bei einer Temperatur, die unterhalb der Temperatur des Schmelzpunktes des verwendeten Separators im Elektroden-Separator-Verbund liegt. Mit dieser Maßgabe werden thermische Schädigungen an dem Elektroden-Separator-Verbund sicher vermieden. Auf der anderen Seite sollte die Temperatur der Hochtemperaturphase hoch genug sein, um eine Erweiterung der Öffnungsweite des metallischen Gehäuseteils zu erreichen.

Die Zeitdauer der Hochtemperaturphase kann relativ kurz sein. In der Regel sind einige Sekunden oder sogar Bruchteile einer Sekunde für diese Hocherhitzung des metallischen Gehäuseteils ausreichend, um die gewünschte Expansion zu erreichen.

In besonders bevorzugter Weise ist das Verfahren durch mindestens eines der unmittelbar folgenden zusätzlichen Merkmale gekennzeichnet:
a. Das Erwärmen des metallischen Gehäuseteils umfasst eine Vorwärmphase.
b. In der Vorwärmphase wird das metallische Gehäuseteil auf eine Temperatur in einem Bereich von 35 bis 80 °C, vorzugsweise von 40 bis 70 °C, besonders bevorzugt von 50 bis 60 °C, erwärmt.

Die Vorwärmphase liegt in der Regel vor der Hochtemperaturphase und dient bevorzugt einer verhältnismäßig langsamen Vorwärmung des metallischen Gehäuseteils. Durch die Vorwärmphase werden plötzliche große Temperatursprünge im Material des Gehäuseteils vermieden, so dass es nicht zu Materialschäden durch plötzliche Temperaturwechsel kommt. Vorzugsweise wird in der Vorwärmphase das metallische Gehäuse auf eine Temperatur in einem Bereich von 35 bis 80°C, vorzugsweise von 40 bis 70°C, und besonders bevorzugt von 50 bis 60°C, erwärmt. Prinzipiell kann auch in dieser Phase entsprechend wie in der Hochtemperaturphase nurein Teil des metallischen Gehäuseteils entsprechend erwärmt werden. Im Allgemeinen ist es insbesondere in der Vorwärmphase jedoch bevorzugt, dass das gesamte metallische Gehäuseteil erwärmt wird, um Materialspannungen zu vermeiden. Durch die im Vergleich mit der Hochtemperaturphase niedrigeren Temperaturen ist eine gleichmäßige Erwärmung des metallischen Gehäuseteils in der Vorwärmphase ohne Weiteres auch in einem kurzen Zeitraum möglich, so dass eine vollständige Vorwärmung des metallischen Gehäuseteils einem schnellen, automatisierten Prozess nicht entgegensteht.

In besonders bevorzugten Ausführungsformen des Verfahrens folgt unmittelbar nach der Vorwärmphase die Hochtemperaturphase. Dabei ist es bevorzugt, dass in der Hochtemperaturphase das Gehäuseteil nur sehr kurzzeitig, das heißt für nur einige Sekunden (1 bis 10 s) oder gegebenenfalls weniger als eine Sekunde, auf die erforderliche Temperatur gebracht wird.

In besonders bevorzugter Weise ist für die Hochtemperaturphase ein elektrischer Energieeintragzur Erwärmung des metallischen Gehäuseteils vorgesehen, insbesondere ein induktiver und/oder ein ohmscher Energieeintrag. Mit diesen Methoden kann die Hochtemperaturphase sehr schnell und gezielt durchgeführt werden. Für die technischen Umsetzung können hierbei insbesondere die bereits erwähnten Elektroden an das metallische Gehäuseteil angelegt und bestromt werden, so dass die gezielte Erhitzung durch ohmschen Energieeintrag innerhalb kürzester Zeit erfolgen kann.

Vorzugsweise erfolgt die Vorwärmphase unter Verwendung von Abwärme, um einen ökonomisch besonders vorteilhaften Prozess zu ermöglichen.

In besonders bevorzugter Weise ist das Verfahren durch mindestens eines der unmittelbar folgenden zusätzlichen Merkmale gekennzeichnet:
a. Das metallische Gehäuseteil wird nach dem Einbringen des Elektroden-Separator-Verbunds abgekühlt.
b. Das metallische Gehäuseteil wird vor dem Schließen des Gehäuses abgekühlt.

Nach dem Einbringen des Elektroden-Separator-Verbundes in das metallische Gehäuseteil erkaltet das Gehäuseteil in der Regel sehr schnell und schrumpft dabei wieder auf die ursprüngliche Ausdehnung des metallischen Gehäuseteils zurück. Mit dem erfindungsgemäßen Verfahren ist es daher möglich, einen größeren Elektroden-Separator-Verbund in das Innere des Gehäuseteils einzubringen, als es bei herkömmlichen Verfahren möglich ist. Das Volumen des Innenraums des Gehäuseteils kann damit optimal ausgenutzt werden.

Der Schritt des Abkühlens des Gehäuseteils kann passiv ausgestaltet sein. Im einfachsten Fall wartet man einfach, bis das Gehäuseteil wieder Raumtemperatur erreicht. Es kann insbesondere aus produktionstechnischen Gründen aber gewünscht sein, den Abkühlvorgang aktiv zu unterstützen, beispielsweise um ein Tränken des Elektroden-Separator-Verbunds mit einem flüchtigen Elektrolyten zu ermöglichen. Die kann beispielsweise mittels eines Kühlgebläses unterstützt werden.

Bei dem Material des metallischen Gehäuseteils kann es sich beispielsweise um vernickelten Stahl oder Edelstahl, der gegebenenfalls auch vernickelt sein kann, oder um einseitig oder beidseitig mit Aluminium beschichtetes Material handeln. In einer besonders bevorzugten Ausführungsform besteht das Gehäuse aus einem Stahl, insbesondere einem Edelstahl, und weist eine Innenseite auf, die mindestens bereichsweise mit Aluminium beschichtet ist. Eine außenseitige Beschichtung mit Nickel oder einem anderen korrosionsbeständigen Material ist optional. In weiteren möglichen Ausgestaltungen kann es sich um Verbünde aus verschiedenen metallischen Materialien handeln, beispielsweise um sogenannte Trimetalle, beispielsweise um einen Verbund aus Kupfer, Edelstahl und Nickel. Weiterhin können Materialpaarungen mit Aluminium vorteilhaft sein.

In besonders bevorzugten Ausgestaltungen ist das metallische Material des Gehäuseteils im Hinblick auf dessen Wärmeausdehnungseigenschaften optimiert. Auf diese Weise kann durch die Erwärmung im Zuge des erfindungsgemäßen Herstellungsverfahrens eine optimierte Expansion der Gehäuseteils erreicht werden.

In einer weiteren bevorzugten Ausführungsform des erfindungsgemäßen Verfahrens ist das Verfahren durch das folgende zusätzliche Merkmal gekennzeichnet:
a. Vor dem Einbringen des Elektroden-Separator-Verbundes in das metallische Gehäuseteil wird der Elektroden-Separator-Verbund gekühlt.

Durch eine vorangehende Kühlung des Elektroden-Separator-Verbundes vor dessen Einbringung in das metallische Gehäuseteil kann eine gewisse Schrumpfung des Elektroden-Separator-Verbundes erreicht werden. Dies kann in Kombination mit der Erwärmung und thermischen Expansion des metallischen Gehäuseteils die Einbringung des Elektroden-Separator-Verbundes in das Gehäuseteil weiter erleichtern und gegebenenfalls eine weitere Vergrößerung des Elektroden-Separator-Verbundes im Vergleich mit herkömmlichen Herstellungsverfahren erlauben. Im Allgemeinen ist die spezifische Wärmekapazität des Elektroden-Separator-Verbundes größer als die des metallischen Gehäuseteils, so dass die Kühlung des Elektroden-Separator-Verbundes etwas weniger effektiv als die Erwärmung des metallischen Gehäuseteils ist. Dennoch kann diese Kühlungsphase weitere Vorteile beziehungsweise eine weitere Verbesserung des erfindungsgemäßen Verfahrens erlauben. In diesem Zusammenhang kann es weiterhin vorteilhaft sein, wenn auch schon die Ausgangsmaterialien für die Herstellung des Elektroden-Separator-Verbundes gekühlt sind. Beispielsweise kann es vorgesehen sein, dass bei der Herstellung eines Wickels als Elektroden-Separator-Verbundes bereits die Elektroden gekühlt in einen Wickelautomaten eingebracht werden.

In besonders bevorzugten Ausgestaltungen des erfindungsgemäßen Verfahrens ist das Verfahren durch mindestens eines der folgenden zusätzlichen Merkmale gekennzeichnet:
a. Zumindest das Erwärmen des metallischen Gehäuseteils wird unter entfeuchtenden Bedingungen durchgeführt.
b. Zumindest das Einbringen des Elektroden-Separator-Verbundes in das metallische Gehäuseteil wird unter entfeuchtenden Bedingungen durchgeführt.
c. Zumindest das Erwärmen des metallischen Gehäuseteils (101) wird unter Unterdruckbedingungen durchgeführt.
d. Zumindest das Einbringen des Elektroden-Separator-Verbundes in das metallische Gehäuseteil wird unter Unterdruckbedingungen durchgeführt.

In besonders bevorzugter Weise werden die vorgenannten Merkmale a. und c., insbesondere die Merkmale a. und c. und d., und besonders bevorzugt die Merkmale a. bis d. miteinander kombiniert.

Durch die entfeuchtenden Bedingungen während der Erwärmung gemäß dem vorgenannten Merkmal a. und/oder während der Einbringung des Elektroden-Separator-Verbundes in das Gehäuseteil gemäß dem vorgenannten Merkmal b. können negative Feuchtigkeitseffekte bei der Zellperformance in besonders effektiver Weise verhindert werden. Die entfeuchtenden Bedingungen können beispielsweise dadurch realisiert werden, dass Produktion der Energiespeicherzellen in Rein- und/oder Trockenräumen vorgenommen wird, wie es im Allgemeinen bei industriellen Fertigungsprozessen oftmals bereits ohnehin der Fall ist. Es ist auch möglich, dass gezielt Luft mit niedrigerem Taupunkt eingebracht wird. Gegebenenfalls kann zusätzlich beispielsweise eine Vakuumtrocknung vorgenommen werden. Vorzugsweise werden die Bedingungen so eingestellt, dass die Restfeuchte unter 300 ppm, besonders bevorzugt unter 100 ppm, liegt. Die geeigneten Umgebungsbedingungen in einem Trockenraum liegen beispielsweise bei 1 ± 0,5 % relativer Feuchtigkeit.

Alternativ oder zusätzlich können Unterdruckbedingungen während der Erwärmung gemäß dem vorgenannten Merkmal c. und/oder während der Einbringung des Elektroden-Separator-Verbundes in das metallische Gehäuseteil gemäß dem vorgenannten Merkmal d. vorgesehen sein. Die Unterdruckbedingungen unterstützen zum einen die Entfeuchtung. Zum anderen kann durch Unterdruckbedingungen die Einbringung des Elektroden-Separator-Verbundes in das Gehäuseteil erleichtert werden. Bei der Durchführung des Verfahrens bei Umgebungsdruck kann die im Inneren des Gehäuseteils enthaltene Luft einen Gegendruck beim Einbringen des Elektroden-Separator-Verbundes ausüben beziehungsweise die vorhandene Luft im Gehäuseteil kann unter Umständen nicht schnell genug entweichen. Durch die Unterdruckbedingungen wird dies vermieden. Dies hat den besonderen Vorteil, dass auch die Prozessgeschwindigkeit weiter erhöht werden kann. In vorteilhaften Ausführungsformen kann der Druck beispielsweise in einem Bereich von 1 mbar - 800 mbar liegen, vorzugsweise in einem Bereich von 10 mbar bis 500 mbar.

Es ist besonders bevorzugt, wenn die Erwärmung des metallischen Gehäuseteils mit einer Trocknung verbunden wird, wobei die Trocknung insbesondere durch Zugabe von trockener Luft und/oder unter Einsatz eines Vakuums bzw. eines Unterdrucks unterstützt wird. Unter einem Unterdruck ist hierbei zu verstehen, dass ein Druck unterhalb von Umgebungsdruck eingestellt wird, insbesondere 800 mbar oder weniger, vorzugsweise 500 mbar oder weniger.

Das Verschließen des Gehäuses und die Kontaktierung der Elektroden mit dem Gehäuse kann in an sich bekannterWeise, vergleichbar mit herkömmlichen Prozessen, erfolgen. Beispielsweise kann die Öffnung eines becherförmigen Gehäuseteils unter Verwendung einer elektrisch isolierenden Dichtung durch einen Bördelvorgang verschlossen werden oder aber es wird die Öffnung durch Einschweißen eines Deckels verschlossen.

Das erfindungsgemäße Verfahren eignet sich sowohl zur Herstellung zylindrischer Energiespeicherelemente als auch zur Herstellung prismatischer Energiespeicherelemente. Demgemäß kann es sich bei dem Gehäuse des Energiespeicherelements um ein zylindrisches Gehäuse oder um ein prismatisches Gehäuse handeln.

In besonders bevorzugter Weise wird das erfindungsgemäße Verfahren zur Herstellung zylindrischer Rundzellen eingesetzt. Besonders bevorzugt sind hierbei Energiespeicherelemente mit einem Formfaktor 21 x 70 (Durchmesser x Höhe in mm). Selbstverständlich kann das erfindungsgemäße Verfahren auch zur Herstellung von Energiespeicherelementen mit einem anderen Formfaktor mit Vorteil eingesetzt werden.

Bei dem Elektroden-Separator-Verbund kann es sich um einen zylindrischen Wickel oder um einen prismatischen Stapel aus Elektroden handeln. In besonders bevorzugter Weise handelt es sich um einen zylindrischen Wickel-Verbundkörper, wie er üblicherweise in zylindrischen Rundzellen eingesetzt wird.

In besonders bevorzugten Ausgestaltungen des erfindungsgemäßen Verfahrens ist das Verfahren durch mindestens eines der folgenden zusätzlichen Merkmale gekennzeichnet:
a. Das elektrochemische Energiespeicherelement ist eine Lithium-Ionen-Zelle oder umfasst eine oder mehrere Lithium-Ionen-Zellen.

Als elektrochemisch aktive Komponenten (Aktivmaterialien) für Lithium-Ionen-Zellen kommen prinzipiell sämtliche Materialien in Frage, die Lithium-Ionen aufnehmen und wieder abgeben können. Für die negative Elektrode eignen sich Partikel auf Kohlenstoffbasis, insbesondere graphitischer Kohlenstoff. Es können auch andere, nicht-graphitische Kohlenstoffmaterialien verwendet werden, die zur Interkalation von Lithium befähigt sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien können insbesondere in Partikelform in den Elektroden enthalten sein.

Die Elektroden für Lithium-Ionen-Zellen sind vorzugsweise als Kompositelektroden aufgebaut, die neben den elektrochemisch aktiven Komponenten auch elektrochemisch inaktive Komponenten umfassen. Weiterhin umfassen die Kompositelektroden vorzugsweise einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Als elektrochemisch inaktive Komponenten umfassen die Elektroden vorzugsweise einen Elektrodenbinder, z. B. Polyvinylidenfluorid (PVDF) oder ein anderes Polymer, beispielsweise Carboxymethylzellulose, sowie leitfähigkeitsverbessernde Additive und/oder andere Zusätze. Der Elektrodenbinder gewährleistet die mechanische Stabilität der Elektroden und oftmals auch die Haftung des Aktivmaterials auf den Stromkollektoren.

Als Separatoren zwischen den Elektroden können insbesondere poröse Kunststofffolien verwendet werden, zum Beispiel aus einem Polyolefin oder aus einem Polyetherketon.

Als Elektrolyten von Lithium-Ionen-Zellen eignen sich vor allem Lösungen von Lithiumsalzen wie Lithiumhexafluorophosphat (LiPF₆) in organischen Lösungsmitteln (z. B. Ether und Ester der Kohlensäure).

Die Erfindung umfasst weiterhin ein elektrochemisches Energiespeicherelement mit einem Gehäuse mit mindestens einem metallischen Gehäuseteil und einem im Inneren des Gehäuses angeordneten Elektroden-Separator-Verbund. Das erfindungsgemäße elektrochemische Energiespeicherelement ist dadurch gekennzeichnet, dass es mit dem oben beschriebenen Verfahren hergestellt ist. Bezüglich weiterer Merkmale des Energiespeicherelements wird daher auch auf die obige Beschreibung verwiesen.

Insbesondere zeichnet sich das erfindungsgemäße Energiespeicherelement dadurch aus, dass es eine optimierte Volumenausnutzung des Gehäuses realisiert, wodurch die Kapazität des Energiespeicherelements im Vergleich zu herkömmlichen Energiespeicherelementen erhöht ist und somit eine optimierte Energiedichte erreicht wird. Durch die optimale Ausnutzung des Gehäuseinnenraums wird die mit dem Ladeprozess verbundene Elektrodenexpansion bei dem Elektroden-Separator-Verbund durch den ausgeübten Gegendruck des Gehäuses minimiert und damit eine mechanische Belastung der Elektroden verringert. Weiterhin werden durch die optimale Ausnutzung des Gehäuseinnenraums Vibrationen des Elektroden-Separator-Verbundes innerhalb des Gehäuses verhindert beziehungsweise minimiert. Zugleich wird durch den erfindungsgemäßen Herstellungsprozess die Restfeuchte innerhalb des Gehäuses verringert, so dass negative Auswirkungen einer Feuchtigkeit auf die Zellperformance verhindert werden.

In besonders bevorzugter Weise zeichnet sich das erfindungsgemäße elektrochemische Energiespeicherelement durch die folgenden zusätzlichen Merkmale aus:
a. Das Energiespeicherelement ist eine zylindrische Rundzelle mit einem zylindrischen Gehäuse und mit einem Wickel als Elektroden-Separator-Verbund, und
b. in Bezug auf den Durchmesser der zylindrischen Rundzelle weist das Energiespeicherelement ohne Berücksichtigung eines gegebenenfalls vorhandenen zentralen Hohlraums des Wickels eine räumliche Ausnutzung des Innenvolumens des Gehäuses durch den Wickel von mehr als 95 %, bevorzugt von mehr als 99 %, vorzugsweise von 100 %, auf.

Die Charakterisierung der Energiespeicherzelle in Bezug auf das vorgenannte Merkmal b. bezieht sich dabei auf den Teil bzw. Abschnitt des zylindrischen Gehäuses, in dem der Wickel an der Innenseite des Gehäuses direkt oder mit einem sehr geringen Abstand anliegt. Diese Charakterisierung der Energiespeicherzelle betrifft also nicht die Bereiche der Energiespeicherzelle, die zwischen den Stirnseiten des Wickels und den stirnseitigen Bereichen des zylindrischen Gehäuses liegen. Bei der gemäß dem vorgenannten Merkmal b. definierten räumlichen Ausnutzung des Innenvolumens des Gehäuses durch den Wickel wird weiterhin ein gegebenenfalls vorhandener zentraler Hohlraum des Wickels, der gegebenenfalls teilweise oder vollständig mit einem Wickelkern ausgefüllt sein kann, nicht berücksichtigt. Das heißt also, dass sich die vorgenannten 95 % bzw. die bevorzugten mehr als 99 % bzw. 100 % ausschließlich auf den Raum zwischen dem Außenumfang des Wickels und der Innenseite des Gehäuses beziehen.

Demgemäß kann das Innenvolumen des Gehäuses der zylindrischen Rundzelle im Hinblick auf den Durchmesser des Gehäuses maximal ausgenutzt werden, um so das Totvolumen der Rundzelle zu minimieren. Durch die Erwärmung des metallischen Gehäuseteils im Rahmen des Herstellungsverfahrens kann ein Elektroden-Separator-Verbund mit einem Außenumfang in das Innere des Gehäuseteils eingebracht werden, der dem Innenumfang des Gehäuseteils bei Raumtemperatur entspricht. Die durch die Erwärmung des Gehäuseteils erreichte Aufweitung der Öffnung des Gehäuseteils erlaubt eine Einbringung des Elektroden-Separator-Verbundes mit ausreichend Spiel während des Fertigungsprozesses. Durch die nachfolgende Abkühlung des Gehäuseteils legt sich die Wandung des Gehäuses unmittelbar, also ohne Abstand, an den Außenumfang des Elektroden-Separator-Verbundes an, so dass eine maximale Volumenausnutzung erreicht wird. Durch den im Vergleich mit herkömmlichen Energiespeicherelementen vergrößerten Elektroden-Separator-Verbund kann zum einen die Kapazität der Energiespeicherelemente erhöht werden. Zugleich wird eine Stabilisierung des Elektroden-Separator-Verbundes zur Vermeidung von Verspannungen bei einer Elektrodenexpansion und zur Vermeidung von Vibrationen innerhalb des Gehäuses erreicht.

Die räumliche Ausnutzung des Innenvolumens des Gehäuses, bezogen auf den Querschnitt, von bevorzugt 100% bezieht sich dabei auf den Elektroden-Separator-Verbund im ungeladenen Zustand. Eine übermäßige Expansion der Elektroden im Rahmen des Ladeprozesses wird durch die Stützung des Gehäuses aufgefangen.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

### KURZBESCHREIBUNG DER ZEICHNUNGEN

In den Figuren zeigen:
- Fig 1: schematische Längsschnittdarstellung einer beispielhaften zylindrischen Rundzelle; und
- Fig. 2: schematische Darstellung der verschiedenen Schritte bei der Herstellung einer zylindrischen Rundzelle (Schritte A- I), jeweils im Längsschnitt.

### DETAILLIERTE BESCHREIBUNG DER AUSFÜHRUNGSBEISPIELE

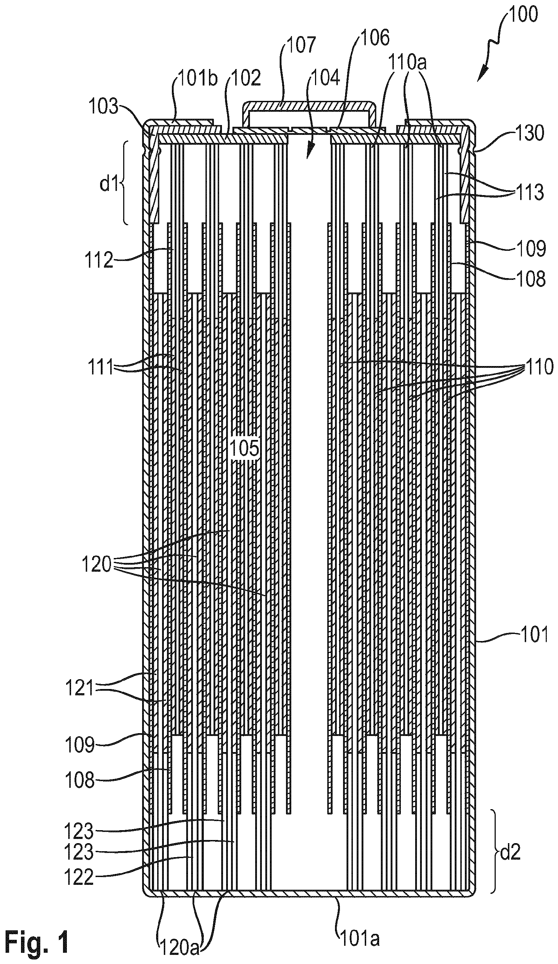

Die in **Fig. 1** im Längsschnitt dargestellte Energiespeicherzelle 100 in Form einer zylindrischen Rundzelle ist im sogenannten Kontaktplattendesign ausgebildet und stellt ein mögliches Beispiel für ein elektrochemisches Energiespeicherelement dar, das mit dem erfindungsgemäßen Verfahren herstellbar ist. Die Energiespeicherzelle 100 umfasst ein becherförmig ausgebildetes, metallisches Gehäuseteil 101 mit einem scheibenförmigen Boden 101a und einer kreisförmigen Öffnung (definiert durch den Rand 101b) im oberen Bereich. Bei dem metallischen Gehäuseteil 101 handelt es sich insbesondere um ein becherförmiges Tiefziehteil. In der hier gezeigten geschlossenen bzw. fertig montierten Form der Energiespeicherzelle 100 ist der Rand 101b zur Schließung des Gehäuses in einem rechten Winkel radial nach innen umgebogen. Der obere Abschluss des Gehäuses wird von einem scheibenförmigen Kontaktelement (Kontaktplatte) 102 mit einem zentralen Loch 104 gebildet. Das zentrale Loch 104 ist durch die Metallscheibe 106 mit einem darauf angeordneten Poldeckel 107 verschlossen. Zwischen dem äußeren Rand der Kontaktplatte 102 und dem oberen Rand 101b des becherförmigen, metallischen Gehäuseteils 101 ist eine Dichtung 103 vorgesehen. Der nach innen umgebogene obere Rand 101b des becherförmigen, metallischen Gehäuseteils 101 umgreift dabei die Dichtung 103 und den äußeren Rand der Kontaktplatte 102.

Das metallische Gehäuseteil 101 schließt gemeinsam mit der Kontaktplatte 102 einen Innenraum ein, in dem der als Wickel ausgebildete Elektroden-Separator-Verbund 105 axial ausgerichtet ist. Das Loch 104 in der Kontaktplatte 102 ist zum Einfüllen des Elektrolyten in das Gehäuse der Energiespeicherzelle 100 während des Fertigungsprozesses vorgesehen, bevor das Loch 104 mit der Metallscheibe (Blechscheibe) 106 verschlossen wird. Im montierten Zustand ist das Loch 104 mittels der Metallscheibe 106 verschlossen. Die Metallscheibe 106 kann eine oder mehrere langgestreckte Vertiefungen als Sollbruchstellen aufweisen, so dass die Metallscheibe 106 als Überdruckventil dienen kann.

Der Elektroden-Separator-Verbund 105 liegt in Form eines zylindrischen Wickels mit zwei endständigen Stirnseiten vor, zwischen denen sich der umlaufende Wickelmantel erstreckt, der an der umlaufenden Innenseite des becherförmigen, metallischen Gehäuseteils 101 anliegt. Der Elektroden-Separator-Verbund 105 ist aus einer positiven Elektrode und einer negativen Elektrode sowie den dazwischen liegenden Separatoren 108 und 109 gebildet, die jeweils bandförmig ausgebildet und spiralförmig gewickelt sind. Die Stirnseiten des Elektroden-Separatoren-Verbundes 105 werden im Prinzip von den Längsrändern der Separatoren 108 und 109 gebildet. Im Zentrum des Wickels bzw. des Elektroden-Separator-Verbundes 105 kann sich ein zentraler Hohlraum und/oder ein Wickelkern befinden.

Aus den Stirnseiten des Elektroden-Separator-Verbundes 105 ragen die Stromkollektoren 110 und 120 hervor. Die entsprechenden Überstände sind mit d1 und d2 bezeichnet. Aus der oberen Stirnseite des Elektroden-Separator-Verbundes 105 tritt der Kathodenstromkollektor 110 aus. Aus der unteren Stirnseite tritt der Anodenstromkollektor 120 aus. Der Kathodenstromkollektor 110 ist in einem bandförmigen Hauptbereich mit einer Schicht aus einem positiven Elektrodenmaterial 111 beladen. Der Anodenstromkollektor 120 ist in einem bandförmigen Hauptbereich mit einer Schicht aus einem negativen Elektrodenmaterial 121 beladen. Der Kathodenstromkollektor 110 weist einen Randstreifen 112 auf, der sich entlang des oberen Längsrands 110a des Kathodenstromkollektors 110 erstreckt und der nicht mit dem positiven Elektrodenmaterial 111 beladen ist. Stattdessen ist hier eine Beschichtung 113 aus einem keramischen Stützmaterial aufgebracht, die den Stromkollektor 110 in diesem Bereich stabilisiert. Der Anodenstromkollektor 120 weist einen Randstreifen 122 auf, der sich entlang des unteren Längsrands 120a desAnodenstromkollektors 120 erstreckt und der nicht mit dem negativen Elektrodenmaterial 121 beladen ist. Stattdessen ist auch hier eine Beschichtung 123 aus einem keramischen Stützmaterial aufgebracht.

Der obere Rand 110a des Kathodenstromkollektors 110 steht über seine gesamte Länge in unmittelbarem Kontakt mit dem scheibenförmigen Kontaktelement (Kontaktplatte) 102 und ist mit diesem mindestens über mehrere Abschnitte, bevorzugt über seine gesamte Länge, beispielsweise durch Verschweißung (insbesondere mit Hilfe eines Lasers), verbunden. Das Kontaktelement 102 dient somit gleichzeitig zur elektrischen Kontaktierung der Kathode und als Gehäusedeckel.

Der untere Rand 120a des Anodenstromkollektors 120 steht über seine gesamte Länge in unmittelbarem Kontakt mit dem Boden 101a des becherförmigen, metallischen Gehäuseteils 101 und ist mit diesem mindestens über mehrere Abschnitte, bevorzugt über seine gesamte Länge, beispielsweise durch Verschweißung (insbesondere mit Hilfe eines Lasers), verbunden. Der Boden 101a des becherförmigen, metallischen Gehäuseteils 101 dient somit nicht nur als Teil des Gehäuses, sondern auch zur elektrischen Kontaktierung der Anode.

Die Dichtung 103 zwischen dem oberen Rand 101b des becherförmigen, metallischen Gehäuseteils 101 und dem abschließenden scheibenförmigen Kontaktelement 102 isoliert die Teile elektrisch voneinander. Der Rand 101b des becherförmigen, metallischen Gehäuseteils 101 ist radial nach innen über den von der Dichtung 103 umschlossenen Rand des Kontaktelements 102 umgebogen und fixiert das Kontaktelement 102 in der kreisförmigen Öffnung des becherförmigen, metallische Gehäuseteils 101. Unterhalb der Umbiegung des oberen Randes 101b des becherförmigen, metallischen Gehäuseteils 101 befindet sich eine umlaufende Sicke 130, die die Anordnung stabilisiert.

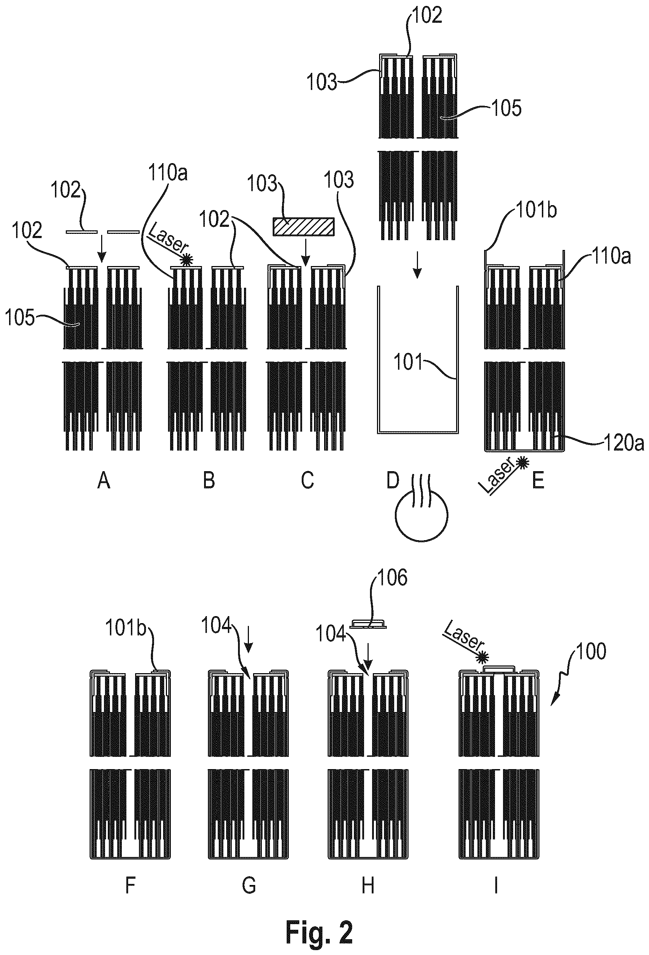

**Fig. 2** illustriert die verschiedenen Schritte A bis I bei der erfindungsgemäßen Herstellung einer solchen Energiespeicherzelle 100, die als zylindrischen Rundzelle im Kontaktplattendesign ausgebildet ist. Zunächst wird im Schritt A der Elektroden-Separator-Verbund 105 bereitgestellt, auf dessen obere Stirnseite das scheibenförmige Kontaktelement (Kontaktplatte) 102 aufgelegt wird.

Das Kontaktelement 102 wird im Schritt B mit dem Elektroden-Separator-Verbund 105 im Bereich von dessen oben herausragendem Längsrand 110a des Kathodenstromkollektors verschweißt.

Im Schritt C wird die umlaufende Dichtung 103 auf den Rand des scheibenförmigen Kontaktelements 102 aufgezogen.

Als wichtiges Merkmal des erfindungsgemäßen Verfahrens erfolgt im Schritt D eine Erwärmung des metallischen Gehäuseteils 101, bevor der Elektroden-Separator-Verbund 105 in das metallische Gehäuseteil eingesetzt wird. Durch die Erwärmung wird eine thermische Expansion des Gehäuseteils 101 erreicht. Durch die thermische Expansion wird die Öffnungsweite des metallischen Gehäuseteils 101 vergrößert, so dass zum einen die Einfügung des Elektroden-Separator-Verbundes 105 erleichtert wird. Zum anderen kann durch diese Maßnahme ein Elektroden-Separator-Verbund 105 mit einem im Vergleich mit herkömmlichen Herstellungsverfahren größeren Außenumfang verwendet werden. Somit kann auf der einen Seite das Innenvolumen des metallischen Gehäuseteils 101 optimal ausgenutzt werden und es wird eine Kapazitätserhöhung der Energiespeicherzelle erreicht und die Energiedichte optimiert. Der Volumengewinn für die Ausmaße des Elektroden-Separator-Verbunds 105 kann beispielsweise bei einem wickelförmigen Elektroden-Separator-Verbund vor allem bei sehr dünnen Elektroden fast eine ganze zusätzliche Wicklung ausmachen. Die zusätzliche Wicklung im Außenbereich des Wickels bringt einen großen Längengewinn an Elektrode und damit eine deutliche Kapazitätserhöhung. Auf der anderen Seite werden durch die optimierte Volumenausnutzung stabilisierende Effekte insbesondere im Hinblick auf eine räumliche Ausdehnung der Elektroden während des Ladevorgangs und der damit verbundenen mechanischen Belastung der Elektroden und im Hinblick auf die Vermeidung von möglichen Vibrationen innerhalb des Gehäuses der Energiespeicherzelle erreicht.

Die Erwärmung im Schritt D erfolgt bevorzugt in zwei Phasen, und zwar einer Vorwärmphase und einer nachfolgenden Hochtemperaturphase. In der Vorwärmphase wird das Material des metallischen Gehäuseteils 101 beispielsweise zunächst auf eine Temperatur von ca. 50 bis 60 °C gebracht. Hierfür kann vorteilhafterweise die Abwärme eines anderen Prozesses genutzt werden. Bereits diese Vorwärmphase kann in einer Unterdruckatmosphäre und/oder unter entfeuchtenden Bedingungen durchgeführt werden, so dass gegebenenfalls noch vorhandene Restfeuchte im Inneren des metallischen Gehäuseteils 101 entfernt wird. Kurz bevor der Elektroden-Separator-Verbund 105 in das metallische Gehäuseteil 101 eingebracht wird, erfolgt die Hochtemperaturphase, und das metallische Gehäuseteil 101 wird beispielsweise auf eine Temperatur von ca. 100 °C erhitzt. In dieser Hochtemperaturphase wird die gewünschte Öffnungsweite des metallischen Gehäuseteils 101 erreicht, so dass der Elektroden-Separator-Verbund 105 eingeschoben werden kann.

Beispielsweise hat ein übliches metallisches Gehäuseteil 101 für eine zylindrische Rundzelle mit dem Formfaktor 21 x 70 (Standard 21700) bei 20 °C ein Innenmaß von ca. 20,6 mm im Bereich der Öffnung. Bei 100 °C, also 80 K Differenz, wird ein Innendurchmesser von größer als 20,8 mm bei einem metallischen Gehäuseteil 101 aus vernickeltem Stahl erreicht. Mit dem erfindungsgemäßen Verfahren kann in diesem Ausführungsbeispiel daher ein wickelförmiger Elektroden-Separator-Verbund 105 mit einem maximalen Außendurchmesser von 20,6 mm eingeführt werden.

Eine Differenz von 0,2 mm zwischen dem durch Erwärmung aufgeweiteten metallischen Gehäuseteil 101 im Innenumfang und dem maximalen Außenumfang des Elektroden-Separator-Verbundes 105 (im ungeladenen Zustand) hat sich im Allgemeinen als besonders geeignet erwiesen, da eine Differenz von 0,2 mm einen Mittelweg zwischen Volumenverlust und aufzuwendender Einbringkraft darstellt. Bei einem Unterschreiten der Differenz von 0,2 mm, beispielsweise bei einer Differenz von nur 0,1 mm, ist die Einbringkraft im Allgemeinen grenzwertig hoch. Auch wenn die Einbringkraft durch eine Unterdruckatmosphäre verringert werden kann, ist es auch im Sinne einer geeigneten Prozessgeschwindigkeit in einem automatisierten Fügeprozess im Allgemeinen vorteilhaft, eine Differenz von 0,2 mm einzuhalten. Das Einhalten der Differenz von 0,2 mm zwischen dem Außenumfang des Elektroden-Separator-Verbundes 105 und dem Innenumfang des Gehäuses gewährleistet darüber hinaus, dass es nicht zu einer Beschädigung des Elektroden-Separator-Verbundes beim Einschieben in das Gehäuseteil 101 kommt.

Auch das Einbringen des Elektroden-Separator-Verbundes 105 in das metallische Gehäuseteil 101 erfolgt vorzugsweise noch unter Unterdruckatmosphäre, um neben der optimierten Prozessgeschwindigkeit auch gegebenenfalls noch vorhandene Restfeuchte zu entnehmen und um das Erkalten zu verlangsamen, so dass eine schonende Materialbehandlung gewährleistet wird.

Bei der Einbringungdes Elektroden-Separator-Verbundes 105 in das becherförmige, metallische Gehäuseteil 101 wird der Elektroden-Separator-Verbund 105 soweit eingeschoben, bis der aus dem Elektroden-Separator-Verbund unten herausragende Längsrand 120a des Anodenstromkollektors in unmittelbarem Kontakt mit dem Boden des becherförmigen, metallischen Gehäuseteils 101 steht.

Im Schritt E wird der Längsrand 120a des Anodenstromkollektors mit dem Boden des becherförmigen, metallischen Gehäuseteils 101 verschweißt.

Im Schritt F wird der Öffnungsrand 101b des becherförmigen, metallischen Gehäuseteils 101 radial nach innen umgebogen.

Im Schritt G erfolgt eine Befüllung des Gehäuses mit Elektrolyt, der durch die Öffnung 104 in das Gehäuse eindosiert wird.

Anschließend wird im Schritt H die Metallscheibe 106 mit dem darauf angeordneten Poldeckel auf die Öffnung 104 gesetzt und im Schritt I mittels Laserschweißen befestigt, so dass das Gehäuse verschlossen wird und so die Energiespeicherzelle 100 fertiggestellt ist.

Das anhand der Figuren 1 und 2 erläuterte Ausführungsbeispiel zeigt eine spezielle Ausbildung einer zylindrischen Rundzelle mit dem sogenannten Kontaktplattendesign. In entsprechender Weise ist das erfindungsgemäße Verfahren auch für die Herstellung anderer Energiespeicherzellen anwendbar. Voraussetzung für die Anwendbarkeit des erfindungsgemäßen Verfahrens ist die Verwendung eines metallischen Gehäuses beziehungsweise eines metallischen Gehäuseteils, in das ein Elektroden-Separator-Verbund eingebracht wird. Insofern kann das erfindungsgemäße Verfahren mit Vorteil im Prinzip für alle Energiespeicherzellen mit einem metallischen Gehäuse eingesetzt werden. Dies gilt also sowohl für zylindrische Rundzellen und Knopfzellen als auch für prismatische Zellen.

## Patentansprüche

1. Verfahren zur Herstellung eines elektrochemischen Energiespeicherelements (100), wobei das Energiespeicherelement ein Gehäuse mit mindestens einem metallischen Gehäuseteil (101) und einen im Inneren des Gehäuses angeordneten Elektroden-Separator-Verbund (105) aufweist, **dadurch gekennzeichnet, dass** das Verfahren die folgenden Verfahrensschritte umfasst:
a. Das metallische Gehäuseteil (101) und der Elektroden-Separator-Verbund (105) werden bereitgestellt, und
b. das metallische Gehäuseteil (101) wird unter Bewirkung einer Expansion des Gehäuseteils erwärmt, und
c. der Elektroden-Separator-Verbund (105) wird in das expandierte metallische Gehäuseteil (101) eingebracht, und
d. das metallische Gehäuseteil (101) wird zur Ausbildung des Gehäuses verschlossen.

2. Verfahren nach Anspruch 1 mit dem folgenden zusätzlichen Merkmal:
a. Das Erwärmen des metallischen Gehäuseteils (101) gemäß Schritt b. des Anspruchs 1 erfolgt durch elektrischen Energieeintrag, insbesondere durch induktiven und/oder ohmschen Energieeintrag.

3. Verfahren nach Anspruch 1 oder Anspruch 2 mit mindestens einem der folgenden zusätzlichen Merkmale:
a. Das Erwärmen des metallischen Gehäuseteils (101) gemäß Schritt b. des Anspruchs 1 umfasst eine Hochtemperaturphase.
b. In der Hochtemperaturphase wird das metallische Gehäuseteil (101) zumindest bereichsweise auf eine Temperatur in einem Bereich von 80 bis 150 °C, vorzugsweise von 90 bis 110 °C, besonders bevorzugt von 95 bis 105 °C, erwärmt.

4. Verfahren nach einem der vorhergehenden Ansprüche mit mindestens einem der folgenden zusätzlichen Merkmale:
a. Das Erwärmen des metallischen Gehäuseteils (101) gemäß Schritt b. des Anspruchs 1 umfasst eine Vorwärmphase.
b. In der Vorwärmphase wird das metallische Gehäuseteil (101) auf eine Temperatur in einem Bereich von 35 bis 80 °C, vorzugsweise von 40 bis 70 °C, besonders bevorzugt von 50 bis 60 °C, erwärmt.

5. Verfahren nach Anspruch 4 mit dem folgenden zusätzlichen Merkmal:
a. Die Temperatur des metallischen Gehäuseteils (101) in der Vorwärmphase wird unter Verwendung von Abwärme herbeigeführt.

6. Verfahren nach einem der vorhergehenden Ansprüche mit dem folgenden zusätzlichen Merkmal:
a. Das metallische Gehäuseteil (101) wird nach dem Einbringen des Elektroden-Separator-Verbunds (105) abgekühlt.
b. Das metallische Gehäuseteil (101) wird vor dem Schließen des Gehäuses abgekühlt.

7. Verfahren nach einem der vorhergehenden Ansprüche mit dem folgenden zusätzlichen Merkmal:
a. Vor dem Einbringen des Elektroden-Separator-Verbundes (105) in das metallische Gehäuseteil (101) gemäß Schritt c. des Anspruch 1 wird der Elektroden-Separator-Verbund (105) gekühlt.

8. Verfahren nach einem der vorhergehenden Ansprüche mit mindestens einem der folgenden zusätzlichen Merkmale:
a. Zumindest das Erwärmen des metallischen Gehäuseteils (101) gemäß Schritt b. des Anspruchs 1 wird unter entfeuchtenden Bedingungen durchgeführt.
b. Zumindest das Einbringen des Elektroden-Separator-Verbundes in das metallische Gehäuseteil (101) gemäß Schritt c. des Anspruchs 1 wird unter entfeuchtenden Bedingungen durchgeführt.
c. Zumindest das Erwärmen des metallischen Gehäuseteils (101) gemäß Schritt b. des Anspruchs 1 wird unter Unterdruckbedingungen durchgeführt.
d. Zumindest das Einbringen des Elektroden-Separator-Verbundes in das metallische Gehäuseteil (101) gemäß Schritt c. des Anspruchs 1 wird unter Unterdruckbedingungen durchgeführt.

9. Verfahren nach einem der vorhergehenden Ansprüche mit einem der folgenden zusätzlichen Merkmale:
a. Das Gehäuse des Energiespeicherelements (100) ist ein zylindrisches Gehäuse.
b. Das Gehäuse des Energiespeicherelements (100) ist ein prismatisches Gehäuse.

10. Verfahren nach einem der vorhergehenden Ansprüche mit einem der folgenden zusätzlichen Merkmale:
a. Der Elektroden-Separator-Verbund (105) ist ein Wickel.
b. Der Elektroden-Separator-Verbund ist ein Stapel.

11. Verfahren nach einem der vorhergehenden Ansprüche mit dem folgenden zusätzlichen Merkmal:
a. Das elektrochemische Energiespeicherelement (100) ist eine Lithium-Ionen-Zelle oder umfasst eine oder mehrere Lithium-Ionen-Zellen.

12. Elektrochemisches Energiespeicherelement (100) mit einem Gehäuse mit mindestens einem metallischen Gehäuseteil (101) und einem im Inneren des Gehäuses angeordneten Elektroden-Separator-Verbund (105), wobei das elektrochemische Energiespeicherelement nach einem Verfahren gemäß einem der Ansprüche 1 bis 13 hergestellt ist.

13. Elektrochemisches Energiespeicherelement nach Anspruch 12 mit den folgenden zusätzlichen Merkmalen:
a. Das Energiespeicherelement (100) ist eine zylindrische Rundzelle mit einem zylindrischen Gehäuse und mit einem Wickel als Elektroden-Separator-Verbund (105), und
b. in Bezug auf den Durchmesser der zylindrischen Rundzelle weist das Energiespeicherelement ohne Berücksichtigung eines gegebenenfalls vorhandenen zentralen Hohlraums des Wickels eine räumliche Ausnutzung des Innenvolumens des Gehäuses durch den Wickel von mehr als 99 % auf.
